# EUROPEAN PATENT APPLICATION

(11) **EP 4 647 288 A1**
(43) Date of publication of application: **12.11.2025**
(21) Application number: 24179165.6
(22) Date of filing: 31.05.2024
(51) Int. Cl.: B60L 53/62, B60L 53/51, B60L 53/52, B60L 53/53, B60L 53/63, H02J 7/00

(54) **SYSTEMS AND METHODS FOR CONTROLLING MULTIPLE DISTRIBUTED ENERGY RESOURCES (DERS)**

(30) Priority: 08.05.2024 US 202463644446 P
(71) Applicant: PowerFlex Systems, LLC, San Diego, CA 92128 (US)
(72) Inventor: SPELLMAN, Mary, San Diego, 92128 (US); OLSEN, Erik, San Diego, 92128 (US); WOODALL, Benjamin, San Diego, 92128 (US); HENLEY, Ryan, San Diego, 92128 (US)
(74) Representative: Abel & Imray LLP

(57) **Abstract**

Certain aspects of the present disclosure provide techniques for controlling, for example, via operation of one or more controllers, multiple distributed energy resources (DERs). In examples, techniques may include receiving, via a first device interface, first data from an electric vehicle supply equipment (EVSE); receiving, via a second device interface, second data from a non-EVSE energy asset; determining a charging rate for the EVSE based on the first data and the second data; and controlling charging of the EVSE based on the charging rate.

## Description

### CROSS-REFERENCE TO RELATED APPLICATIONS

This Application claims the benefit of and priority to U.S. Provisional Patent Application No. 63/644,446, filed on May 8, 2024.

### INTRODUCTION

Electric vehicle (EV) charging infrastructure is a rapidly growing field. An increasing number of EV charging stations are being deployed at various sites, and a multitude of EV charging station manufacturers provide these EV charging stations for the various sites. These sites often incorporate additional energy assets such as, for example, solar panels, wind turbines, etc. Managing and controlling the EV charging stations and the energy assets is becoming increasingly more challenging, as more devices and assets of different types are being added to the sites. The increasing number of devices and assets (e.g., each requiring a unique monitoring and controlling system) manufactured by different manufacturers makes it difficult to monitor data generated by the devices and assets and to control the devices and assets based on the generated data. As the EV charging infrastructure continues to expand, these problems are expected to become more pronounced.

### SUMMARY

In accordance with certain embodiments of the present disclosure, a method is provided for controlling, for example, via operation of one or more controllers, multiple distributed energy resources (DERs). The method may include: receiving, via a first device interface, first data from an electric vehicle supply equipment (EVSE); receiving, via a second device interface, second data from a non-EVSE energy asset; determining a charging rate for the EVSE based on the first data and the second data; and controlling charging of the EVSE based on the charging rate.

Other embodiments of the present disclosure may provide non-transitory, computer-readable mediums comprising instructions that, when executed by one or more processors of one or more processing systems, cause the one or more processing systems to perform the aforementioned methods as well as those further described herein; a computer program product embodied on a computer readable storage medium comprising code for performing the aforementioned methods as well as those further described herein; and a processing system comprising means for performing the aforementioned methods as well as those further described herein.

The following description and the related drawings set forth in detail certain illustrative features of one or more embodiments.

### DESCRIPTION OF THE DRAWINGS

The embodiments set forth in the drawings are illustrative and exemplary in nature and not intended to limit the disclosure. The following detailed description of the illustrative embodiments can be understood when read in conjunction with the following drawings, where like structure is indicated with like reference numerals and in which:
**FIG. 1** depicts a computing environment for managing electric vehicle charging, according to embodiments provided herein;
**FIG. 2** depicts a software configuration for an edge environment for managing electric vehicle charging, according to embodiments provided herein;
**FIGS. 3A-3C** depict device configurations for an edge environment for managing electric vehicle charging, according to embodiments provided herein;
**FIGS. 4A-4C** depict hardware that may be utilized for the devices from **FIGS. 3A-3C****,** according to embodiments provided herein;
**FIG. 5** depicts a device configuration for a cloud environment for managing electric vehicle charging, according to embodiments provided herein;
**FIG. 6** depicts a device configuration for a system for controlling multiple distributed energy resources (DERs), according to embodiments provided herein;
**FIG. 7** depicts an example flowchart illustrating a method for controlling multiple DERs, according to embodiments provided herein; and
**FIG. 8** depicts an example processing system configured to perform the methods described herein.

### DETAILED DESCRIPTION

Embodiments disclosed herein include systems and methods for controlling multiple distributed energy resources (DERs), including both electric vehicle supply equipments (EVSEs) and non-EVSE energy assets. Some embodiments utilize a plurality of device interfaces configured for communicating with a plurality of corresponding DERs to collect data (e.g., telemetry data) from the plurality of DERs, for example, for a centralized system configured to monitor and/or control the plurality of DERs. The centralized system may control, for example, one or more EVSEs at a site based on the collected telemetry data. Certain embodiments may utilize an edge computing architecture that handles core EVSE management functionalities on-site. Furthermore, certain embodiments may utilize a backend system, such as, for example, a cloud-based backend system that handles core EVSE management functionalities remotely. Though certain examples may be discussed with respect to specific implementations, the techniques used herein may be used with any suitable EVSE control system, such as on-site, cloud-based, or a combination thereof. The systems and methods for controlling multiple DERs incorporating the same will be described in more detail, below.

A technical problem addressed by some embodiments of the present disclosure is related to, for example, a photovoltaic (PV) data acquisition system (DAS) (e.g., a solar DAS) configured for monitoring and collecting data from a PV infrastructure with limited ability to control (e.g., remote reset, curtailment, power limiting, etc.). Certain embodiments of the present disclosure provide a solution that utilizes a centralized hardware platform to leverage a distributed architecture of integrating various types of communications and device support in software to provide site energy management and data acquisition in centralized hardware platform and software architecture. Some embodiments of the present disclosure may utilize, for example, a dedicated Universal Serial Bus (USB)-to-serial communication interface or serial-to-ethernet communication interface (e.g., using modbus TCP). Technical benefits provided by certain embodiments of the present disclosure include offering a combined system that may be a service provider and a data aggregator, lowering installation and maintenance costs, and providing increased ability to adapt to site changes.

On a DER site with any combination of multiple DERs including, for example, non-EVSE energy asset(s), such as solar energy system(s), wind energy system(s), energy storage system(s), etc., along with EVSE(s), some embodiments of the present disclosure provide a hardware and/or software product that can support the integration and monitoring of these EVSE and non-EVSE technologies. In certain embodiments, the techniques described herein provide a solution that resolves the issues related to, for example, a need for separate control and/or monitoring platforms for EVSEs and non-EVSE energy assets, and/or an added complexity for optimization of the EVSEs and the non-EVSE energy assets when the EVSEs and the non-EVSE energy asset(s) are all monitored separately (e.g., due to data being retrieved from multiple different controllers, such as via cloud-based application programming interfaces (APIs), performing the monitoring, instead of the assets directly). Certain embodiments of the present disclosure provide a solution for monitoring and co-optimizing various DERs and energy assets, such as EVSEs and non-EVSE energy assets, with a same hardware and/or software platform. Further, as the need for monitoring certain non-EVSE assets via separate controllers (e.g., utilizing cloud-based APIs) may be mitigated by some embodiments of the present disclosure, the system described herein may, in some example cases, implement optimization and load management for local DERs (e.g., of a given site) even when the given site may be offline (e.g., without data connectivity to any cloud-based system or component(s)) or experiencing intermittent connectivity outage. It would be apparent to one of ordinary skill in the art that, while some embodiments of the present disclosure may be described with respect to solar energy systems of a given site as an example non-EVSE energy asset, the given site may include and work with other types of non-EVSE energy asset(s), and any number of non-EVSE energy asset(s), without departing from the spirit and scope of the disclosure.

Moreover, some embodiments of the present disclosure provide a solution for readily integrating a new energy asset (e.g., of a different technology, requiring a different type of connection for communication therewith) into an existing monitoring and controlling system without requiring significant additional resources. For example, a site with some existing DERs, controlled by a system described herein, would require minimal (or no) additional hardware to add additional DER asset(s). In certain embodiments, a controller configured to control multiple DERs including, for example, energy storage systems and EVSEs can also be or include a DAS for other assets such as solar energy systems, which can collect telemetry data from all connected DERs, provide performance computations and alerts, and control operations of the connected DERs based on the collected telemetry data and/or performance computations. For example, no separate DAS hardware may be required for adding a solar energy system to such existing multi-DER system.

### Example Computing Environment

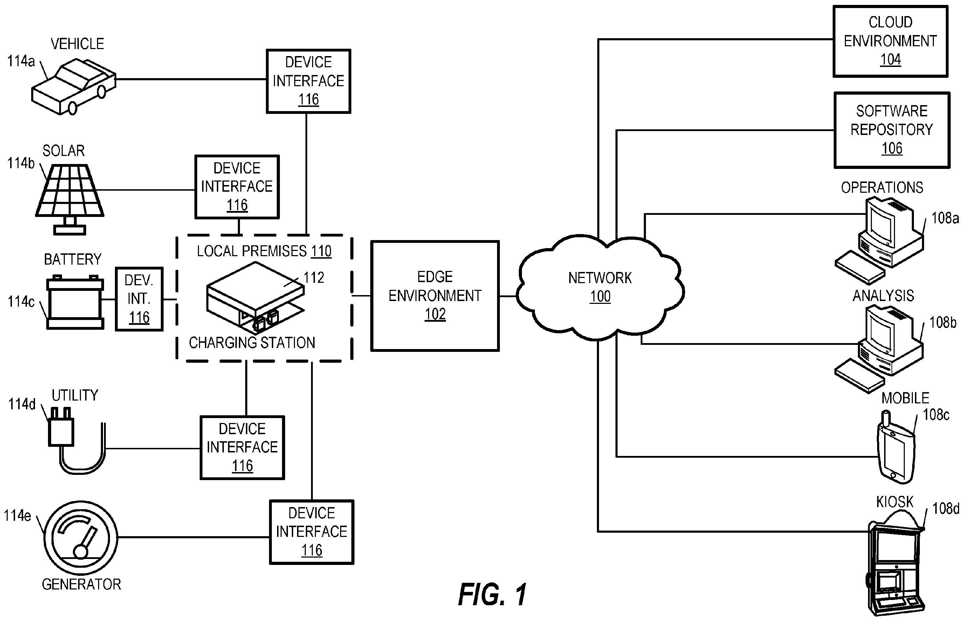

Referring now to the drawings, **FIG. 1** depicts a computing environment for managing electric vehicle charging, according to embodiments provided herein. As illustrated, the computing environment includes a network 100 that is coupled to an edge environment 102, a cloud environment 104, a software repository 106, as well as one or more ancillary devices 108 (including an operations device 108a, an analysis device 108b, a mobile device 108c, and/or a kiosk device 108d). The network 100 may be configured as any wide area network (WAN, such as the internet, power network, cellular network, etc.) or other network for facilitating communication among the edge environment 102, the cloud environment 104, the software repository 106, and the ancillary devices 108.

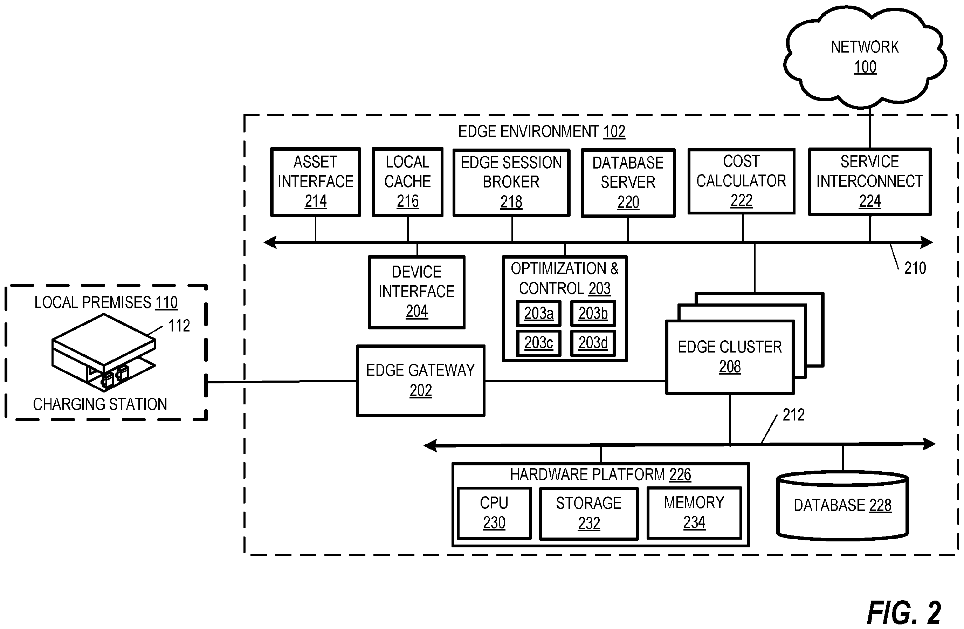

The edge environment 102 may generally be deployed at a local premises site 110 (also referred to herein as a site) to provide various services, including coordination and optimization of one or more energy assets 114 (including an EV 114a, a solar device 114b, a battery energy storage system (BESS) 114c, a utility grid 114d, and/or a generator 114e), such as for charging of electric vehicles (e.g., EV 114a) using charging station 112 using one or more of various distributed energy resources (DERs), such as the solar device 114b, the BESS 114c, the utility grid 114d, and/or the generator 114e (e.g., an on-site diesel, natural gas, or other type of fueled generator). Generally, the aforementioned DERs may provide energy to the charging station 112 and/or use energy from the charging station 112 (e.g., by way of a backflow of energy from the EV 114a to other aspects of the site 110). In some embodiments, the charging station 112 may send excess energy back to the BESS 114c and/or to the utility grid 114d. Generally, the edge environment 102 may monitor and/or modify the energy sent to and received from the DERs to optimize various tasks, such as the charging of the EV 114a. In certain embodiments, the energy asset(s) 114 may be connected to the site 110 via one or more corresponding hardware device interfaces 116 (referred to herein as hardware device interface(s) 116 or device interface(s) 116). In various embodiments, the device interface(s) 116 may support one or more physical connection types, such as having various types of physical connectors, such as DB9, RJ45, USB-A, USB-C, etc., to be able to connect to various devices. Further, in certain embodiments, the device interface(s) 116 may support communication using one or more communication protocols for communications, including but not limited to, for example, serial, Modbus TCP protocol over ethernet, etc. In some embodiments, the device interface(s) 116 may enable direct communication between the energy asset(s) 114 and the edge environment 102, where one or more components of the edge environment 102 (e.g., described herein with reference to **FIG. 2****)** may collect data (e.g., telemetry data) from and/or control one or more of the energy assets 114 without requiring a connection to the cloud environment 104 (e.g., to utilize an API for any energy asset). Telemetry data may be or include data that are measured (e.g., automatically) by, for example, one or more sensors at one or more of the devices described here, such as EVSEs and non-EVSE energy assets. The telemetry data may include, for example, one or more of, but not be limited to: information from solar inverters, such as power, energy, phase voltage, phase current, power factor, reactive power, and/or frequency; information from weather sensor(s) (e.g., of weather station device(s)), such as irradiance, ambient temperature, back of module temperature, relative humidity, barometric pressure, wind speed, and/or wind direction (which may be used for determining or modeling how much electricity a solar installation can provide); and/or information from one or more meters, such as power, energy, phase voltage, phase current, power factor, reactive power, and/or frequency. In certain embodiments, the telemetry data may include information related to status, warning, fault, or the like related to solar inverters and/or weather station devices. For example, the telemetry data may include solar inverter fault information (e.g., a solar inverter fault message), which may be, for example, "error in rapid shutdown device," and weather station fault information (e.g., a weather station fault message), which may be, for example, "irregular reading."

The charging station 112 may utilize one or more of various communication protocols, such as open smart charging protocol (OSCP), open charge point interface (OCPI), ISO 15118, OpenADR, open charge point protocol (OCPP), etc. and may represent Level 1, Level 2, Level 3, and higher level charging stations, as applicable. Generally, the "level" of a charging station refers to the power level and/or ability to provide electric power to a device being charged.

The edge environment 102 is configured as an interface between various aspects of the site 110 and the network 100. In various embodiments, compute resources for performing different functions at a site, such as control or optimization of EV charging may be split between local compute resources in the edge environment 102 and remote compute resources, e.g., in the cloud environment 104 of **FIG. 1****.**

The cloud environment 104 is coupled to the edge environment 102 via the network 100 and may be configured for further processing of data, as described herein. While **FIG. 1** depicts a single cloud environment 104 that serves a single edge environment 102, this is merely an example, as some embodiments may be configured such that the cloud environment 104 may serve a plurality of edge environments 102 that each serve one or more sites 110, one or more charging stations 112, one or more DERs, and the like.

The software repository 106 is also coupled to the site 110 via the network 100. The software repository 106 may be configured as a platform to program, store, manage, and control changes, etc. to software that is implemented in the edge environment 102 and/or the cloud environment 104. In some embodiments, the software repository 106 may be configured as a proprietary service and/or may be provided by a third-party, such as GitHub^{™}. Additionally, some embodiments may be configured such that the software repository 106 is provided by the same entity that manages the cloud environment 104. As such, these embodiments may be configured such that the software repository 106 and the cloud environment 104 may be combined.

With respect to the ancillary devices 108, the operations device 108a may be utilized to monitor and/or alter operations of the computing environment provided in **FIG. 1****.** The analysis device 108b may analyze utilization, operation, charging, and/or other features of the computing environment provided in **FIG. 1****.** The mobile device 108c may represent an administrator device and/or a user device. As a user device, the mobile device 108c may initiate charging, perform payment, and/or perform other user-specific actions. As an administrator device, the mobile device 108c may perform administrative operations, analysis, and/or other actions. The kiosk device 108d may be located at one of the charging stations 112 and/or remote therefrom and may provide user-specific or administrative actions, similar to that of the mobile device 108c. In some embodiments, one or more administrators may use the kiosk device 108d to view information about a site or make changes. As will be understood by one of ordinary skill in the art, the ancillary devices 108 may each include one or more processors, one or more memory components, and/or other hardware and/or software for performing the functionalities provided herein. It should be understood that while the kiosk device 108d is depicted as being remote from the site 110, some embodiments may not be configured in this manner. Specifically, some embodiments may utilize a kiosk device 108d that is local at the site 110, which may communicate via a local network and/or the network 100 for providing the services described herein.

### Example Edge Environment

Referring now to **FIG. 2****,** the edge environment 102 may be coupled to the site 110 via an edge gateway 202. The edge environment 102 may be operatively coupled to various aspects of the site 110, such as the charging station 112 via the edge gateway 202. The edge environment 102 further includes an edge cluster 208, which is coupled to communication bus 210 and hardware bus 212. The communication bus 210 is coupled to optimization and control manager 203, asset interface 214, local cache 216, edge session broker 218, database server 220, cost calculator 222, and service interconnect 224 in this example. Moreover, the communication bus 210 is coupled to device interface 204. The hardware bus 212 is coupled to hardware platform 226, which may include one or more processors, such as CPU 230, one or more storage components 232, one or more memory components 234, and/or other hardware components. Also coupled to the hardware bus 212 is database 228. Though certain components (e.g., cost calculator 222, database server 220, etc.) of edge environment 102 are depicted separate from hardware platform 226, they may be services or processes configured to run on hardware platform 226. Further, though certain components are illustrated as separate components, the functionality of such components may be combined into a single component and/or further divided among additional components.

The communication bus 210 and the hardware bus 212 may be utilized to facilitate operation of all services that run in the edge environment 102 and communicate with each other via a distributed message streaming system. The coupling of the aforementioned services may be accomplished in some embodiments via a distributed message streaming system, such as NATS.

In the depicted example, the charging station 112 is configured for communication with the edge environment 102 via the edge gateway 202, such as via a short-range wireless network technology, such as via a ZigBee^{®} PAN. The edge gateway 202 may be configured to receive data, such as electric vehicle charging data, price change data, vehicle data, etc. from the charging station 112 and/or vehicles that are being charged via the connection with the site 110 (of **FIG. 1****).**

In some embodiments, the edge gateway 202 may be configured to abstract data received from various aspects of the site 110 (of **FIG. 1****),** such as the charging station 112, to remove protocol-specific distinctions. For example, a first charging station may utilize a first communication protocol and/or billing protocol and a second charging station may utilize a second communication protocol and/or billing protocol. The edge gateway 202 may receive data packets from both the first charging station using the first communication protocol and the second charging station using the second communication protocol and may transform the received data into a protocol-agnostic format prior to providing the data to the edge cluster 208. This may allow wide interoperability between the edge environment 102 and various types of hardware (e.g., the charging station 112) at a site.

The edge cluster 208 is the central message center in various embodiments. For example, when a user plugs a vehicle into the charging station 112, the edge cluster 208 receives data from the edge gateway 202, parses that data (e.g., to generate access state data) and causes the state data to be sent to the database server 220. The edge cluster 208 also receives the data and creates a session entry, which may be stored in the local cache 216. The edge cluster 208 may additionally send the session entry to the cloud environment 104 (of **FIG. 1****)** via the network 100. The edge session broker 218 may also receive data related to the new session and may query the database server 220 to access additional session data to determine charging characteristics for the charging station 112.

The edge session broker 218 may produce data or signals that are sent to the edge cluster 208, which may be sent to the edge gateway 202 for potentially sending back to one or more of the charging stations 112. Information that may be reported might include current delivered over time (e.g., amperes), total energy delivered (e.g., kWh), power delivered over time (e.g., kW), voltage at the charging station over time (e.g., V), charging station state (e.g., connected, disconnected, offline), connectivity state, charging state, etc. The charging stations 112 may report any errors back to the edge cluster 208. The cost calculator 222 may be engaged to access pricing data from the cloud environment 104 and may calculate costs incurred based on delivered energy, expected costs prior to charging, idle time interval, parking time interval, etc. The asset interface 214 may be a software interface between the edge environment 102 and the energy assets 114. The device interface 204 (e.g., hardware device interface 116 of **FIG. 1****)** may be or include a hardware interface between the edge environment 102 and the energy assets 114, where the energy assets 114 may require different types of connections. For example, the device interface 204 and the asset interface 214 may be used for communicating with the energy assets 114 including, for example, one or more EVSEs and one or more non-EVSE assets such as renewable energy systems (e.g., solar energy systems, wind energy systems, etc.).

The edge cluster 208 may be configured such that any message received by the edge cluster 208 may also be sent to the cloud environment 104 (of **FIG. 1****)** for consumption by a data subscriber in the cloud environment 104. For example, if a user of the mobile device 108c (in **FIG. 1****)** desires to claim a charging session, the mobile device 108c does not need to access the edge environment 102 directly. Instead, the mobile device 108c may connect with the cloud environment 104 (of **FIG. 1****),** which sends a message to the edge cluster 208 with an instruction to claim the session. The service interconnect 224 is configured for establishing an HTTP, TCP, and/or other type of communication with the cloud environment 104 (of **FIG. 1****)** via the network 100.

The optimization and control manager 203 may provide energy optimization and adaptive load management (ALM) functions, for example, for various energy assets 114 at the site 110 (of **FIG. 1****).** For example, the optimization and control manager 203 may be responsible for calculating set-points for each asset for the energy optimization and ALM amongst the energy assets 114 and providing data related to the calculated set-points to the asset interface 214. In certain embodiments, the optimization and control manager 203 may include a database layer 203a to store data related to site configurations, an orchestration layer 203b to gather data and trigger optimizations, an optimization layer 203c to calculate set-points, and a control layer 203d for higher frequency feedback based controls. In some embodiments, the functionalities of the optimization and control manager 203 may be implemented, at least in part, within the cloud environment 104 (of **FIG. 1****).**

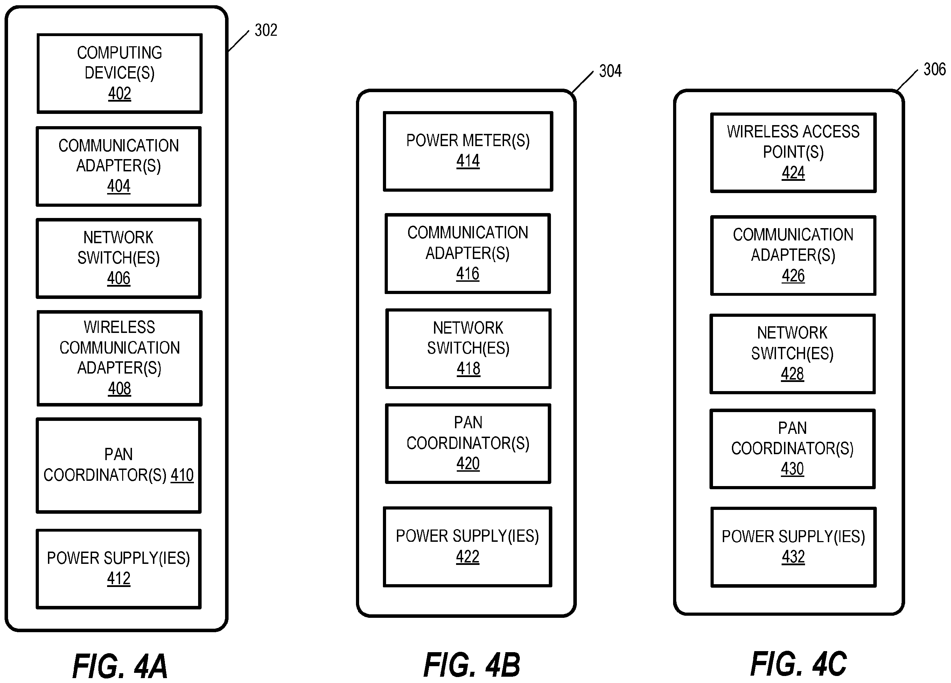

The hardware platform 226 represents any hardware for facilitating the processes and actions described herein. Specifically, the one or more CPUs 230 may represent one or more types of processing device configured for executing instructions. The one or more storage components 232 may be configured as long term storage, such as a hard drive or the like. The one or more memory components 234 may include any of various types of read or access memory or the like. The one or more databases 228 may be configured for additional storage and may be housed with the other hardware and/or elsewhere. Examples of different hardware platforms that may be deployed in the edge environment 102 are described further below with respect to **FIGS. 4A-4C****.**

### Hardware Configurations for Edge Environment

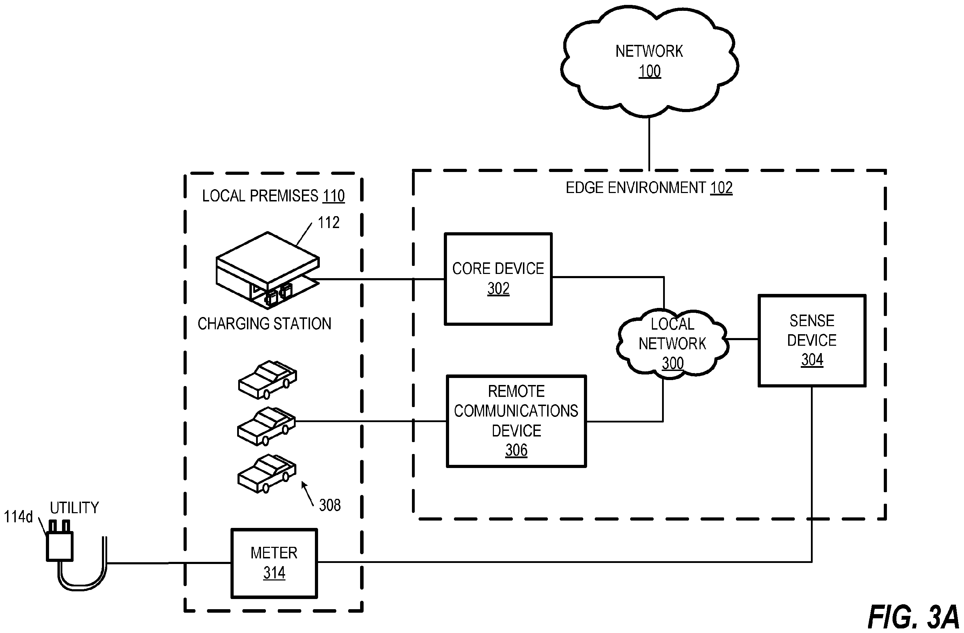

**FIGS. 3A-3C** depict device configurations for edge environment for managing electric vehicle charging, according to embodiments provided herein. **FIG. 3A** depicts a charging solution. As illustrated, the charging station 112 is coupled to a local network 300 via a core device 302. The local network 300 may include any local area network, Ethernet, PAN, etc. The core device 302 may be physically installed within communications range of the one or more chargers in the charging station 112. A sense device 304 may be installed, for example, in an electrical room or in another enclosure with electrical equipment of the charging station 112 and/or the one or more energy assets 114 to monitor the main metering point for the local utility point of common coupling. This may enable one or more algorithms to provide the optimal dispatch of EV charging power, subject to local energy rates and the vehicles currently charging. In the case that there are vehicles 308 using EV chargers that are out of communications range of the core device 302, such as a sub-level of a parking garage, one or more remote communications devices 306 are included as required. For example, the remote communications devices 306 may be connected to the EV chargers by PAN such as Zigbee.

In certain embodiments, one or more of the remote communications devices 306 may include the device interface 116 (of **FIG. 1****)** and may be configured to connect (e.g., directly) to certain one(s) of the energy assets 114. For example, these remote communications device(s) may be physically close to the energy assets 114 to enable the direct connection (e.g., via connections that enable communication using one or more communication protocols for communications, including but not limited to, for example, serial, Modbus TCP protocol over ethernet, etc.). The core device 302, connected to such remote communications device(s) 306 may receive data, such as telemetry data, from the energy assets 114 via the remote communications device(s) 306, as described herein.

Also included at the site 110 is a meter 314 for communicating energy with the utility grid 114d.

The core device 302 shown in **FIG. 3A** is the central processing device and serves as the communications hub. In certain embodiments, the components of **FIG. 2** may generally operate, at least in part, as part of the core device 302. The core device 302 may provide optimization, load management, communication coordination, and/or data historian services. The core device 302 may communicate with the cloud environment 104 via cellular modem, wired internet service provider (ISP), and/or other communications medium to get current optimization and load management set points for the charging stations 112 and/or other assets, such as via an optimization algorithm that may be stored locally and/or at the cloud environment 104. It will be understood, however, that some embodiments may be configured such that the core device 302 performs optimization locally. In certain embodiments, the core device 302 dispatches these set points through a local communications protocol (e.g., Wi-Fi) and/or via the remote communications device 306 to reach locations that are distant or hard to reach, such as charging stations with a core device 302 and/or sense device 304 at sub-levels of a parking garage or a rooftop solar inverter. The core device 302 may additionally or alternatively collect data directly from distributed energy resources and power measurement devices or through cloud-based communications with the network 100. In some embodiments, the remote communications device 306 may provide one or more connectors compatible with various connection types including, for example, serial, ethernet (e.g., using a Modbus TCP protocol for communication), etc.

Power and energy metering data may be collected via the sense device 304. The sense device 304 may include a smart meter with support for multiple single- and three-phase loads, such as with a local historian and Ethernet communication back to the device via the local network 300. The sense device 304 may also incorporate support for additional devices running on the edge including but not limited to thermocouple wiring, weather stations, temperature sensors, pyranometers, etc. It should be noted that additional sense devices 304 and remote communications devices 306 can be added to handle a variety of situations, such as a separate subpanel for energy metering of a new solar system or for monitoring of a new inverter associated with a rooftop solar installation. In certain embodiments, certain remote communications device(s) 306 may be utilized for the core device 302 to connect (e.g., directly) to one or more non-EVSE assets having, for example, solar or wind energy systems. The remote communications device(s) 306 may include, for example, the device interface 116 (of **FIG. 1****),** and collect or acquire data from certain one(s) of the energy assets 114, which the core device 302 may otherwise connect to separate controller(s) (e.g., utilizing separate API(s), such as cloud-based API(s)) to communicate with. For example, the core device 302 may utilize the remote communications device(s) 306 to connect to and collect data, such as telemetry data, from the energy asset(s) 114 even when the core device 302 may not have data connectivity to the cloud environment 104 (of **FIG. 1****)** to connect to remote controller(s) or API(s) to communicate with the energy asset(s) 114. In certain embodiments, the core device 302 may connect to these remote communications device(s) 306 via, for example, fiber connections.

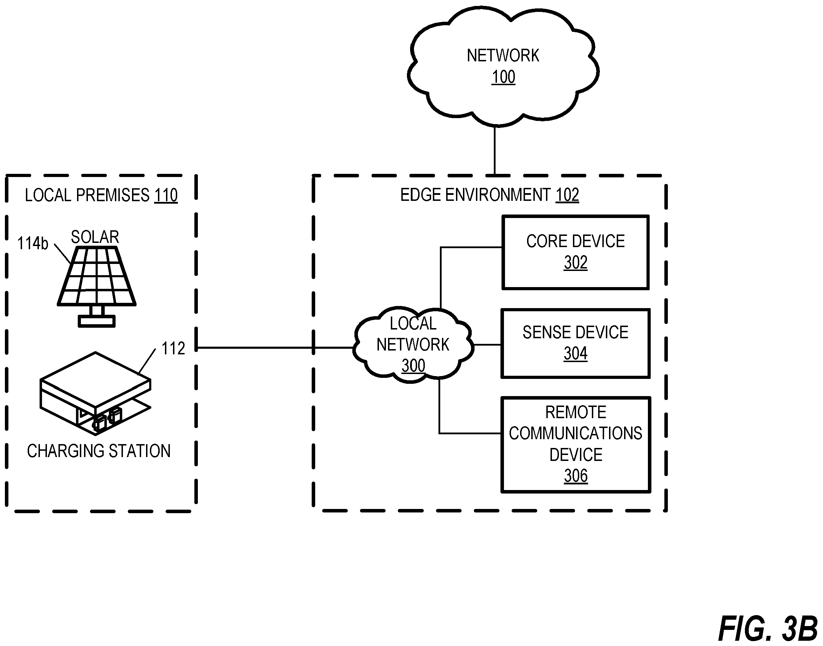

**FIG. 3B** depicts a solar application where the core device 302 and the sense device 304 are installed in an electrical room or other common area. The sense device 304 can monitor the main metering point for the local utility as well as the solar production at tie-in breakers for the solar device 114b. The remote communications device 306 may be installed in a position to communicate directly with the solar device 114b and report the data received from the solar device 114b to the core device 302. Accordingly, the core device 302, the sense device 304, and the remote communications device 306 depicted in **FIG. 3B** may perform similar functions as those devices depicted in **FIG. 3A****.**

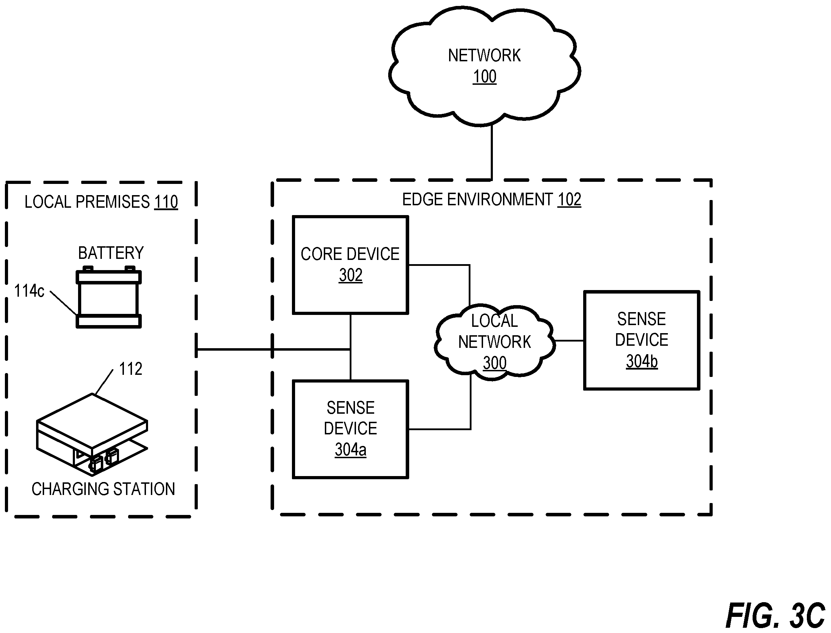

**FIG. 3C** depicts a battery application where the core device 302 and the sense device 304 (including a first sense device 304a and a second sense device 304b) are installed physically near the BESS 114c. In some cases where the BESS 114c is near the point of common coupling with the utility grid 114d, a single sense device 304a can monitor the full site. In some cases where there is a significant distance to the metering point for the utility grid 114d, the second sense device 304b (or a plurality of second sense devices 304b) may be installed near the utility meter, such as the electrical room.

In certain embodiments, one or more portions of the systems shown in **FIGS. 3A-3C** may be combined for a given site, such that the site includes, for example, at least the solar device 114b as well as the BESS 114c.

### Hardware Components in Core, Sense, and Remote Communications Devices

**FIGS. 4A-4C** depict hardware that may be utilized for the devices from **FIGS. 3A-3C****,** according to embodiments provided herein. Specifically, **FIG. 4A** depicts hardware components that may be present in the core device 302. In some embodiments, the core device 302 is the brain where the energy optimization and adaptive load management (ALM) functions (e.g., by the optimization and control manager 203 of **FIG. 2****)** are executed and dispatched. As illustrated, the core device 302 may include one or more computing devices 402, one or more communication adapters 404, one or more network switches 406, one or more wireless communication adapters 408, one or more PAN coordinators 410, and/or one or more power supplies 412. As will be understood, the computing device(s) 402 may include one or more processors, one or more memories, and/or other components that a conventional, specific-purpose machine may utilize. In some embodiments, the computing device(s) 402 may include power line communication (PLC) infrastructure, while some embodiments may utilize retail and/or micro-industrial computer components for optimization, load management, communication coordination, and/or historian services.

The communication adapter(s) 404 may be configured for load balancing and otherwise managing communications of E.G. Modubus RTU (RS485) to Modbus TCP (ethernet) or Ethernet IP (RJ45) to Ethernet Optical (SFP), etc. The network switch(es) 406 may be configured for routing of network traffic, and may be configured as an Ethernet switch for communication to other nodes (e.g., the sense device 304, the remote communications device 306, and/or other core device 302), distributed energy resources, and/or energy based management systems.

The wireless communication adapter(s) 408 may include a cellular modem, internet modem, Wi-Fi access point, etc. for facilitating wireless communications to the internet or other wide area network. Similarly, the PAN coordinator(s) 410 may be configured to create and/or join communication connections with other devices. This may include a ZigBee coordinator, Bluetooth device, and/or other device for performing this function. The power supply(ies) 412 may be configured as battery power, connection to external power, etc.

**FIG. 4B** depicts hardware components of the sense device 304 from **FIGS. 3A-3C****.** The sense device 304 may be configured as a smart-metering piece for collection and storage of power/energy data such as measurements such as temperature, voltage, current, power, solar irradiance, wind speed, etc. The sense device 304 may include a smart meter with multiple channels of measurement that may comprise single-phase circuits and/or three-phase circuits. The sense device 304 may communicate meter data back to the core device 302 from meter locations such as electrical rooms, rooftop solar installations, EV chargers, and subpanels. Certain embodiments may be optimized for ease of installation and reduced intrusion to the site. Power over Ethernet (PoE) sourced from the core device 302 may suffice for most installations. The sense device 304 may transmit data back to the core device 302 via a network switch. The sense device 304 may be optimized to utilize minimal power, and PoE may be acceptable for most installations.

As illustrated in **FIG. 4B****,** the sense device 304 includes one or more power meters 414, one or more communication adapters 416, one or more network switches 418, one or more PAN coordinators 420, and/or one or more power supplies 422. The power supply(ies) 422 may include a power interface for providing power to the sense device 304. The power meter(s) 414 may be utilized for monitoring single-phase and three-phase loads of power. The communication adapter(s) 416 may be utilized for facilitating communications between the sense device 304 and other devices. The network switch(es) 418 may be a PoE enabled switch for communication. Similarly, the PAN coordinator(s) 420 may create and/or join personal area networks, such as via ZigBee, Bluetooth, and the like. In some embodiments, PoE or other power source may be utilized.

As illustrated in **FIG. 4C****,** the remote communications device 306 in certain embodiments may be a network-connectivity extension, for example, for EV charging or solar monitoring locations where ZigBee, Wi-Fi, or Ethernet is being extended to remote or difficult-to-reach locations such as remote subpanels, parking garage levels, or rooftop inverters. Some embodiments are optimized for ease of installation and reduced intrusion to the site where PoE may suffice for most installations from the core device 302. In some embodiments, the remote communications device 306 may include device interface 116 (of **FIG. 1****)** and provide an interface between the core device 302 and one or more energy assets 114 (of **FIG. 1****).** The remote communications device 306 may be configured to transmit data back to the core device 302 via a network switch.

Specifically, the remote communications device 306 may include one or more wireless access points 424, one or more communication adapters 426, one or more network switches 428, one or more PAN coordinators 430, and/or one or more power supplies 432. The wireless access point(s) 424 may be configured to extend wireless communication signals to chargers and/or other intelligent electronic devices. The communication adapter(s) 426 may be configured for facilitating communications between the remote communications device 306 and other devices (e.g., over serial or other types of connections). The network switch(es) 428 may be configured as a PoE Ethernet switch and/or other network switch for communicating with the core device 302. The PAN coordinator(s) 430 may be configured to create and/or join personal area networks, such as via ZigBee, Bluetooth, and the like. The power supply(ies) 432 may include a power interface for providing power to the remote communications device 306.

### Example Cloud Environment

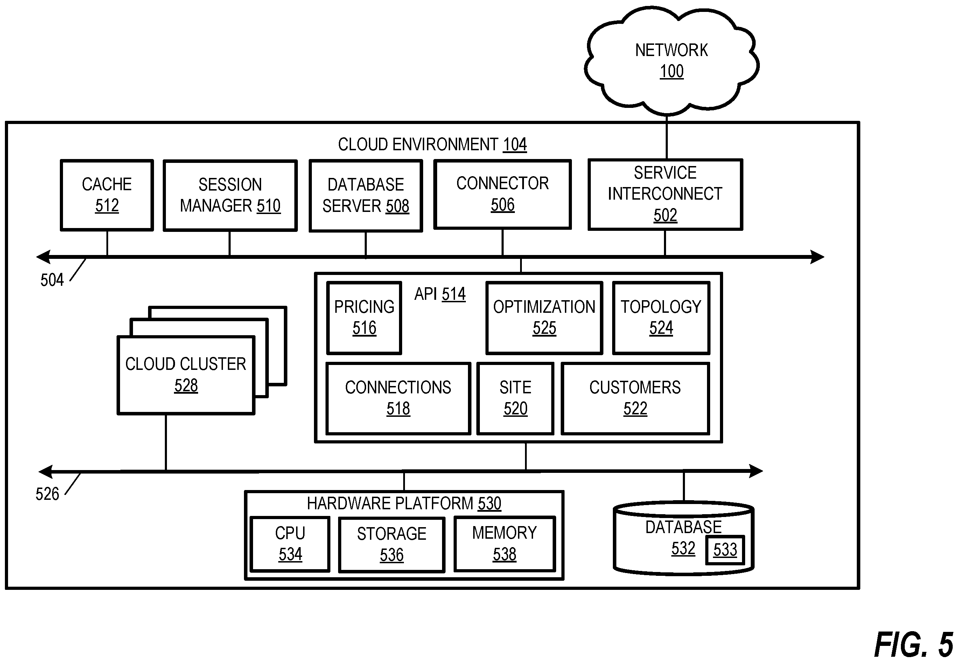

**FIG. 5** depicts a device configuration for a cloud environment for managing electric vehicle charging, according to embodiments provided herein. As illustrated, the network 100 may couple to the cloud environment 104 via a service interconnect 502 that corresponds with the service interconnect 224 from **FIG. 2****.** Similar to the service interconnect 224 from **FIG. 2****,** the service interconnect 502 may be configured to facilitate an HTTP, TCP, and/or other communication portal through the network 100 to the edge environment 102 for the exchange of data between the edge environment 102 and the cloud environment 104. Additionally or alternatively, the service interconnect 502 may be configured to facilitate an HTTP, TCP, and/or other communication portal through the network 100 directly with an EVSE, such as charging station 112, for the exchange of data between the edge environment 102 and the EVSE. For example, in some such embodiments, cloud environment 104 may be configured with the same or similar components as edge environment 102 (e.g., in addition or alternative to one or more components shown in **FIG. 5****)** and configured to perform functions similar to edge environment 102, such that a separate edge environment 102 may not be needed.

The service interconnect 502 is coupled to a communication bus 504, which facilitates communication among various components of **FIG. 5****.** Also connected to the communication bus 504 are a NATS connector 506, a database server 508, a session manager 510, a cache 512, and a collection of services and application programming interfaces (APIs) 514. The APIs 514 may include a pricing API 516, a connections API 518, a site API 520, a customer's API 522, a topology API 524, and/or an optimization API 525. The APIs 514 may be implemented by the hardware platform 530. A hardware bus 526 is coupled to a NATS cloud cluster 528, as well as the hardware platform 530 and a database 532. The hardware platform 530 may include one or more CPUs 534, one or more storage components 536, and one or more memory components 538. Though certain components of cloud environment 104 are depicted separate from hardware platform 530, they may be services or processes configured to run on hardware platform 530. Further, though certain components are illustrated as separate components, the functionality of such components may be combined into a single component and/or further divided among additional components.

The APIs 514 is a component of the cloud environment 104. As such, the APIs 514 (including the pricing API 516, the connections API 518, the site API 520, the customer's API 522, the topology API 524, and/or the optimization API 525) may cause storage of and/or process site information, site topology, customers, connections to panels, constraints of panels, pricing information of each site, local forecasting services, optimization services, controller services, caching services, etc. The APIs 514 may also serve as a mobile backend by storing personal information of charge users (e.g., email, charging preferences, payment preferences, privileges, access, fleet information, etc.). The APIs 514 may additionally store peak charging configurations, data related to meter setup, etc. In some cases, the APIs 514 may also be responsible for tracking changes to EVSE connections and causing related changes to various types of data. For example, a newly connecting EVSE may create a new charging session, and a newly disconnecting EVSE may close a charging session. The connection and the disconnection may cause changes in payment information for user(s) of the connecting or disconnecting EVSE(s), for example, related to payment for energy usage. In some embodiments, the pricing API 516 may be used for storing information related to pricing configuration of a charging site, such as the site 110 (of **FIG. 1****).** Some examples of the information related to pricing configuration of a charging site may include, but not be limited to, cost for energy (e.g., $/kWh), cost for parking time (e.g., $/time-interval), cost for idle parking time (e.g., $/idle-time-interval), etc. In certain embodiments, the site API 520 may be or include a service that provides an API to read or change information about a charging site (e.g., site name, address, etc.). The topology API 524 may be used for storing information related to topology of EVSEs, and may be utilized to track, for example, which EVSEs are connected to which electrical panels and whether any electrical panels may be subpanels of other panels. Such information may be utilized for load management. In some embodiments, the optimization API 525 may be responsible for handling optimization requests, performing one or more optimization methods, and communicating the result of the optimization. For example, the optimization API 525 may be or include a service that may be executed when there is a newly connected or disconnected EVSE, such that an optimization may be performed to allocate (e.g., re-allocate) power according to updated state(s) of the EVSE(s).

When a vehicle is plugged into a charging station 112 **(****FIG. 1****),** the edge session broker 218 **(****FIG. 2****)** may communicate connection information to the APIs 514. The connection information may include vehicle information, user information, charging station information, etc. The APIs 514 then create a charge session object, which is stored in the cache 512. The cache 512 sends the session data, along with topology constraints and the charge session object to the edge environment 102. The NATS connector 506 may additionally cause the NATS cloud cluster 528 to maintain the charge session object for retrieval by an interested party. As the session continues, the session manager 510 may be utilized to alter constraints of the session, which may cause the NATS cloud cluster 528 to update the charge session object.

When a user claims a previously created session with the mobile device 108c, the database server 508 may create a database entry (e.g., within the database 532) with the charge session, driver, energy request, willingness to pay, electricity purchased, etc. The NATS connector 506 may update the NATS cloud cluster 528 with the database entry. This data may then be sent to the edge environment 102. When the charge session ends (e.g., when the vehicle is unplugged), that action may be added to the database entry and the database entry may be moved from a current sessions list to a completed sessions list.

In certain embodiments, the database 532 may include optimization data 533 related to, for example, optimization scenarios (e.g., past optimization scenarios which may be used for debugging and/or auditing the performance of a given optimization scheme).

As indicated above, the hardware platform 530 may represent hardware that may be utilized to execute the components described regarding **FIG. 5****.** As such, the CPU(s) 534 may be configured as any processing unit for receiving and executing computer-readable instructions. The storage component(s) 536 may be configured as any hard drive or other local storage device. The memory component(s) 538 may be configured as any type of RAM, ROM, registers, etc. or the like.

### Device Configuration for Interface between Multi-DER Controller and Energy Assets

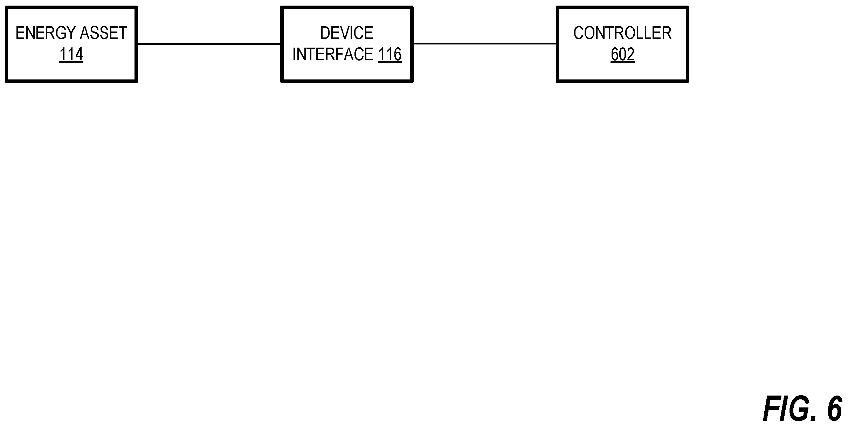

**FIG. 6** depicts a device configuration for a system for controlling multiple DERs, according to embodiments provided herein. As depicted, the system of **FIG. 6** includes a controller 602 (e.g., a multi-DER controller). The controller 602 may be connected to one or more energy assets 114 (of **FIG. 1****)** via one or more device interfaces 116 (of **FIG. 1****).**

In certain embodiments, the controller 602 may be a multi-DER controller connected to the energy asset(s) 114 and also be or include a data acquisition system (DAS) that is compatible with multiple DERs including but not limited to EVSEs and non-EVSE energy assets, such as energy storage systems and renewable energy systems (e.g., solar energy systems, wind energy systems, etc.). The controller 602 may collect data (e.g., telemetry data) from the energy asset(s) 114, provide performance computations and alerts, and/or control the energy asset(s) 114, as well as charging, for example, of the EV 114a (of **FIG. 1****),** via the charging station 112 (of **FIG. 1****),** based on the collected data and/or the performance computations, etc. In certain embodiments, the performance computations and/or alerts may be used to display performance information and/or alerts, such as warnings related to, for example, overloaded or underperforming energy asset(s), on a user interface. For example, the user interface may be implemented by one or more user interface services (e.g., user interface server(s) comprising hardware and/or software configured to provide the user interface) provided by the edge environment 102 and/or the cloud environment 104, and provided on a user device such as the mobile device 108c of **FIG. 1****.**

Examples of computation data (e.g., related to the computations described herein) may include, but not be limited to: (i) modeled power and/or energy data, which may be computed using real-time weather data (e.g., related to real-time weather conditions detected by one or more weather station devices having one or more weather sensors), system specifications (e.g., solar system specifications related to AC and DC system size, inverter efficiency, module temperature coefficient, etc.), and/or expected system loss (e.g., where examples of system loss types may include reflection, mismatch, ohmic wiring, shading, soiling, etc.); (ii) solar availability data, which may be computed using the number of solar assets sending telemetry data, compared to the total number of solar assets on a given site; and/or (iii) performance ratio data, which may be computed using real-time measurements of power and energy, compared to the modeled power and/or energy data. In certain embodiments, the alerts described herein may be provided, via one or more communication channels such as email or the like, for example, to an operator or technician, such that the technician may be dispatched (e.g., to the site generating the alerts) to investigate the alerts.

The controller 602 may provide the capability of collecting telemetry data from various DERs, including, for example, non-EVSE energy assets, such as solar energy systems and energy storage systems, and EVSEs, using the same hardware (e.g., compatible with various connection types of the DERs, allowing data transmission between the controller 602 and the connected DERs). Examples of asset types that are connected to the controller 602 (e.g., to the remote communications device 306 of **FIG. 3** by, e.g., ethernet (e.g., using a Modbus TCP protocol for communication) or serial connections, which may be connected to the controller 602, e.g., in the core device 302 of **FIG. 3** by, e.g., fiber connections) may include but not be limited to: solar inverters, meteorological sensors, solar transformers, relays, real time automated controllers (RTACs), and other system data loggers. The data from these assets may be ingested by the same controller (e.g., the controller 602 of the core device 302) as data for the EVSE, energy storage or other assets, etc. The energy assets 114 may be connected to the controller 602 (e.g., which may be implemented by one or more of the components of edge environment 102 described herein with reference to **FIG. 2****)** via, e.g., ethernet (e.g., using a Modbus TCP protocol for communication) or serial connections, where the collected data may be processed by, e.g., the asset interface 214 (of **FIG. 2****).** The processed data may then be transmitted via NATS to the cloud environment 104 (of **FIG. 1****).**

In certain embodiments, the device interface 116 may be a modular hardware device capable of being remote from the energy asset 114 and/or controller 602. Device interface 116 may be "modular" in that it is separate from controller 602 and energy asset 114 (e.g., each of energy asset 114, controller 602, and device interface 116 is in its own respective separate physical housing). Further, multiple device interfaces 116 may be capable of being connected to controller 602, therefore allowing expandability of the number and/or types of energy assets 114 to which the controller 602 can connect directly (e.g., as in not through an API of a separate controller of the energy asset 114). The device interface 116 may also be able to be installed remotely from controller 602, allowing for connections by controller 602 to geographically diversely located energy assets 114 (e.g., based on a given site layout).

In certain embodiments, by building device interface 116 separate from controller 602 and energy assets 114, existing controllers 602 and/or energy assets 114 may be integrated together, without the need to replace or modify such controller 602 or energy asset 114.

For example, device interface 116 may include at least a first connector or interface that couples to controller 602, and a second connector or interface that couples to energy asset 114. In one example, device interface 116 provides a serial interface to connect to non-EVSE energy assets, and provides an Ethernet interface to connect to controller 602. In certain aspects, device interface 116 is configured to translate between communication protocols of a non-EVSE energy asset and a controller 602, such as to translate serial commands to/from modbus TCP data units. Device interface 116 may allow other types of communication protocol translation and/or other types of physical connections to accommodate a wide range of non-EVSE energy assets.

For example, energy asset 114 may be a non-EVSE energy asset that controller 602 is not natively able to connect directly to, such as based on controller 602 not supporting the communication protocols and/or connectors available at energy asset 114. Device interface 116 may provide a technical solution to this technical problem by being able to connect and communicate with a connection type and communication protocol supported by a non-EVSE energy asset, and to connect and communicate with a connection type and communication protocol supported by a controller 602 configured to monitor and/or control EVSEs.

Such integration at the hardware level of EVSE controllers with non-EVSE energy assets may allow for bypassing use of additional hardware level controllers for the non-EVSE energy assets, thereby simplifying the overall hardware and computing architecture needed to control EVSEs and non-EVSE energy assets, without requiring a complete redesign of EVSE controllers or non-EVSE energy assets to natively support such connectivity.

In addition, such direct hardware integration of EVSE controllers and non-EVSE energy assets via device interface 116 may allow for control of non-EVSE energy assets even when such non-EVSE energy assets are offline, such as lacking cloud or internet connectivity. In particular, some non-EVSE energy assets may be controlled by controllers that are connected to the cloud or internet. Data may be available from such controllers using APIs, for example, and EVSE controller may use the APIs to collect data from such controllers via the cloud. However, if the non-EVSE energy asset controller and/or EVSE controller (e.g., of controller 602) lose access to the cloud, such data access may be lost, if the controller 602 does not have the direct hardware integration provided by certain embodiments of the present disclosure. The direct hardware integration discussed herein may allow such access (e.g., to the data provided by non-EVSE energy assets) locally, without the need for access to the cloud or the internet. Some examples of the data that may be accessed locally (e.g., without being obtained from a separate data source requiring, e.g., the internet or cloud connection) include one or more of, but not be limited to: information from solar inverters, such as power, energy, phase voltage, phase current, power factor, reactive power, and/or frequency; information from weather sensor(s), such as irradiance, ambient temperature, back of module temperature, relative humidity, barometric pressure, wind speed, and/or wind direction (which may be used for determining or modeling how much electricity a solar installation can provide); and/or information from one or more meters, such as power, energy, phase voltage, phase current, power factor, reactive power, and/or frequency. In certain embodiments, such data may be buffered via NATS in the edge environment 102 while the edge environment 102 (e.g., including the controller 602) is offline, and communicated to the cloud environment 104 when the data connectivity to the cloud environment 104 is restored.

In certain embodiments, the aforementioned data (e.g., telemetry data) may be used to provide state or status information, for example, of EVSE(s) and non-EVSE energy asset(s), which may be used for performing optimization and/or load management for a given site having the EVSE(s) and the non-EVSE energy assets. For example, the telemetry data and information that may be obtained from the edge environment 102 and/or the cloud environment 104 (of **FIG. 1****),** for example, as related to a site layout or configuration (e.g., an electrical topology of the site including active and passive electrical components) may be used by, for example, the optimization and control manager 203 of **FIG. 2** (e.g., which may include the functionality of the controller 602) to determine the state or status of the various components of the site and perform various optimization and/or load management processes based on the determined state or status of the various components. For example, the optimization and control manager 203 may generate a graph representative of the electrical topology of the site, determine the state or status of the various components of the site (e.g., updated state or status information, as time progresses), and continuously adjust the charging rate(s) of the EVSE(s) based on optimization and/or load management processes. In some examples, the optimization and control manager 203 may receive an input regarding a particular control strategy (e.g., related to maximum charging rate possible, maximum output from solar inverter, etc.) and adjust the optimized or load balanced charging rate(s) based on the control strategy to control EVSE(s) accordingly. Example data that may be processed for optimization and/or load management related to, for example, the charging rate(s) of the EVSE(s) may include, but not be limited to: real-time weather data, historical weather data, weather forecast data, tariff data, historical asset energy interval data, forecasted asset energy interval data, real-time asset energy usage data, system constraint data, user preference data, and/or market-based strategy data. Other methods of optimization and/or load management may also be possible. The various methods of optimization and/or load management may be performed based on data related to EVSEs and non-EVSE energy assets, described herein. Such optimization and/or load management may be performed more efficiently (e.g., with reduced delays) based on the techniques of obtaining data from EVSEs and non-EVSE energy assets described herein, since the data related to EVSEs and non-EVSE energy assets may be obtained by the same hardware and/or software (e.g., of a combined system of multi-DER controller in data communication with both EVSE(s) and non-EVSE energy asset(s), allowing direct communications that mitigate potential delays associated with, for example, obtaining data from one or more separate controllers).

The direct hardware integration of EVSE controllers and non-EVSE energy assets may also allow for less latency in data acquisition regarding the non-EVSE energy asset(s) by the EVSE controller. Such reduced latency may provide benefits when controlling/optimizing energy control, such as charging rates, for EVSEs. For example, as a storm cloud passes over PV cells of a solar installation, there may be a change in power generation by the PV cells. Other changes in the weather and/or surrounding conditions of EVSEs and/or non-EVSE energy assets, or constraints or requirements related to, for example, the utility grid 114d of **FIG. 1****,** may also be possible or present for a given site. In cloud-based access of the aforementioned information of non-EVSE energy assets, such as the solar installation, by an EVSE controller, there may be latency in getting such information to the EVSE controller, such that changes in control/optimization of energy may be delayed, leading to reduced performance levels. However, direct hardware integration of EVSE controllers and non-EVSE energy assets via device interface 116 may reduce or almost eliminate such latency, thereby improving control/optimization of energy, and leading to improved performance levels.

In certain embodiments, the controller 602 may not only be or include a DAS for non-EVSE energy asset(s) (e.g., enabled by the device interface 116), but also be or include a controller for the non-EVSE energy assets. For example, the controller 602, with the direct hardware integration with the non-EVSE energy assets, may control the non-EVSE energy assets such as a solar installation (e.g., for curtailment, etc.) and energy storage system(s). For example, the non-EVSE energy assets (e.g., a solar energy system and an energy storage system) may be controlled to conform to certain local utility mandate(s), such as, for example, to prevent exporting energy to a utility grid, or to allow a limited amount (e.g., below a threshold amount) of energy to be exported to the utility grid. For example, the controller 602 may determine a state of charge (SOC) of the energy storage system, a current solar production, and/or a current consumption load (e.g., via one or more sensors) at a given site or facility. Then, based on some or all of these inputs (e.g., including an amount of energy generation and an amount of energy utilization at the site or facility), the controller 602 may determine if, for example, (i) curtailment of the solar production (e.g., via direct control of inverter output) and/or (ii) charging and/or discharging of the energy storage system may be desired. In certain embodiments, if there are electric vehicles on the site, they may be considered as part of a control equation to fluctuate the load pulled from the utility grid.

### Processes for Controlling Multiple DERs

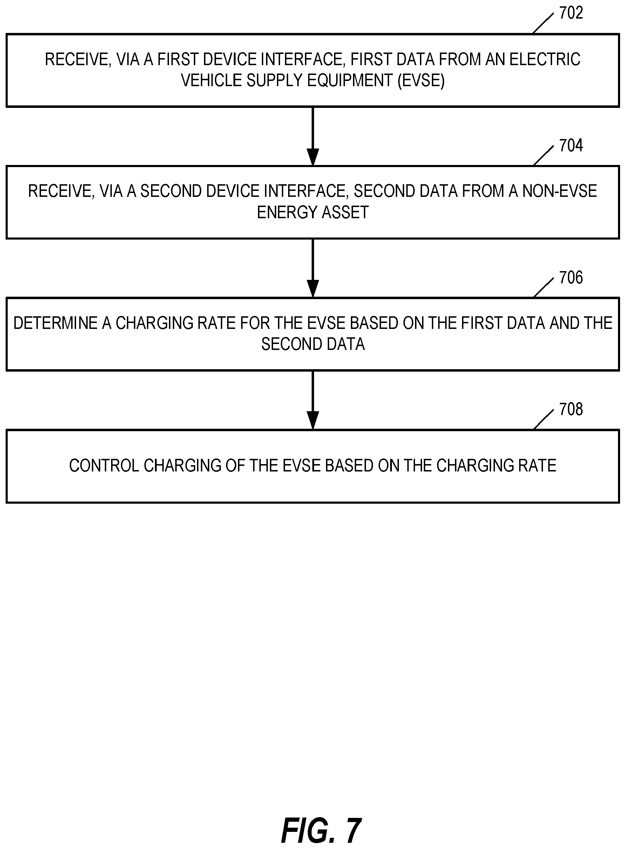

**FIG. 7** depicts an example flowchart for illustrating a method for controlling multiple DERs, according to embodiments provided herein. The method of **FIG. 7** may be performed by, for example, operation of one or more controllers, such as the controller 602 of **FIG. 6****.**

In step 702, the method may include receiving, via a first device interface, first data from an EVSE. For example, the first data may include telemetry data related to the EVSE, as described herein, for example, with reference to **FIG. 1****.** Other types of data related to and/or generated by the EVSE may also be possible. In certain embodiments, the first device interface may correspond to device interface 204 (of **FIG. 2****),** which may be configured for communication with the EVSE.

In step 704, the method may include receiving, via a second device interface, second data from a non-EVSE energy asset. As described herein, examples of the non-EVSE energy asset may include, but not be limited to: a solar energy system, a wind energy system, an energy storage system, etc. The second data may include telemetry data related to the non-EVSE energy asset, as described herein, for example, with reference to **FIG. 1****.** Other types of data related to and/or generated by the non-EVSE energy asset may also be possible. For example, the second device interface may correspond to any of the device interfaces 116 connected to non-EVSE energy asset, such as the solar device 114b, the BESS 114c, etc. shown in and described herein with reference to **FIG. 1****.** In some embodiments, the second device interface may be coupled between the non-EVSE energy asset and the one or more controllers to allow the one or more controllers to receive the second data from the non-EVSE energy asset directly. In certain embodiments, the non-EVSE energy asset and the one or more controllers may be directly coupled, where the second device interface may be, for example, a cable directly connecting the non-EVSE energy asset and the one or more controllers. For example, receiving the second data from the non-EVSE energy asset directly may include receiving the second data from the non-EVSE energy asset without requesting the second data from a separate controller (e.g., via a cloud-based API).

In step 706, a charging rate for the EVSE may be determined based on the first data and the second data. In certain embodiments, determining the charging rate may be further based on at least one of: real-time weather data, historical weather data, weather forecast data, tariff data, historical asset energy interval data, forecasted asset energy interval data, real-time asset energy usage data, system constraint data, user preference data, or market-based strategy data.

In step 708, the method may include controlling charging of the EVSE based on the charging rate.

In some embodiments, the determination of the charging rate for the EVSE and/or the control of the charging of the EVSE based on the charging rate may be performed by, for example, the core device 302 of **FIG. 3****.**

In certain embodiments, the first device interface may include a first physical connector compatible with the EVSE, and the second device interface may include a second physical connector compatible with the non-EVSE asset, wherein the first physical connector may be different than the second physical connector. In some embodiments, the first device interface may communicate with the EVSE using a first communication protocol, and the second device interface may communicate with the non-EVSE energy asset using a second communication protocol, wherein the first communication protocol may be different than the second communication protocol. For example, the first communication protocol may be a packet based protocol, and the second communication protocol may be a serial protocol. The packet based protocol may include connectionless protocol, such as, for example, ethernet, User Datagram Protocol (UDP), etc., or connection-oriented protocol, such as, for example, Transmission Control Protocol (TCP), etc. The first physical connector and the second physical connector may be any type of connector known in the art, which support the respective communication protocols described herein.

### Example Processing System for Controlling Multiple DERs

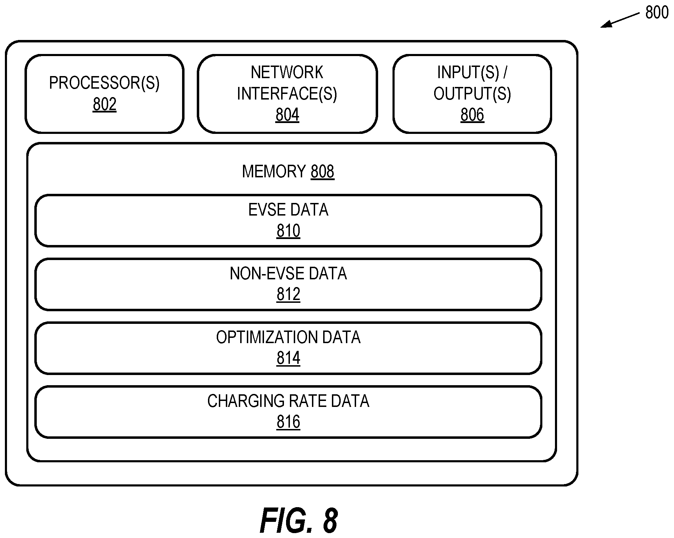

**FIG. 8** depicts an example processing system for controlling multiple DERs, according to embodiments provided herein. In various embodiments, processing system 800 shown in **FIG. 8** may be implemented, for example, at least on the controller 602 of **FIG. 6****.**

As shown, the processing system 800 may include one or more processors 802. Generally, the one or more processors 802 may be configured to execute computer-executable instructions (e.g., software code) to perform various functions, for example, for controlling multiple DERs, as described herein.

The processing system 800 may further include one or more network interfaces 804, which generally provide data access to any sort of data network, including personal area networks (PANs), local area networks (LANs), wide area networks (WANs), the internet, and the like.

Moreover, the processing system 800 may include input(s) and output(s) 806, which generally provide means for providing data to and from the processing system 800, such as via connection to computing device peripherals, including user interface peripherals.

The processing system 800 may also include one or more memories 808 comprising various components. In this example, the one or more memories 808 may include EVSE data 810 (e.g., regarding EVSEs connected to the controller 602 of **FIG. 6****),** non-EVSE data 812 (e.g., regarding one or more non-EVSE DERs connected to the controller of **FIG. 6****),** optimization data 814 (e.g., data related to various optimization set points, etc., useful, for example, for charging of EVs and/or distributing energy amongst various DERs), and/or charging rate data 816 (e.g., data related to charging rates for EVs based on optimization performed based on data collected from multiple DERs).

The processing system 800 may be implemented in various ways. For example, the processing system 800 may be implemented as a computing device 402 within a core device 302, described herein with respect to **FIGS. 3** and **4****.** In certain embodiments, one or more aspects may be omitted from, added to, or substituted from the processing system 800.

### Example Clauses

Implementation examples are described in the following numbered clauses:
Clause 1: A method for operation of one or more controllers, comprising: receiving, via a first device interface, first data from an electric vehicle supply equipment (EVSE); receiving, via a second device interface, second data from a non-EVSE energy asset; determining a charging rate for the EVSE based on the first data and the second data; and controlling charging of the EVSE based on the charging rate, wherein the first device interface and the second device interface are configured for communications based on different connection types.
Clause 2: The method in accordance with clause 1, wherein the first device interface comprises a first physical connector compatible with the EVSE and the second device interface comprises a second physical connector compatible with the non-EVSE energy asset, wherein the first physical connector is different than the second physical connector.
Clause 3: The method in accordance with any one of clauses 1-2, wherein the first device interface communicates with the EVSE using a first communication protocol and the second device interface communicates with the non-EVSE energy asset using a second communication protocol, wherein the first communication protocol is different than the second communication protocol.
Clause 4: The method in accordance with clause 3, wherein the first communication protocol comprises a packet based protocol, and wherein the second communication protocol comprises a serial protocol.
Clause 5: The method in accordance with any one of clauses 1-4, wherein the non-EVSE energy asset comprises at least one of: a solar energy system, a wind energy system, or an energy storage system.
Clause 6: The method in accordance with any one of clauses 1-5, wherein determining the charging rate is further based on at least one of: real-time weather data, historical weather data, weather forecast data, tariff data, historical asset energy interval data, forecasted asset energy interval data, real-time asset energy usage data, system constraint data, user preference data, or market-based strategy data.
Clause 7: The method in accordance with any one of clauses 1-6, wherein the second device interface is coupled between the non-EVSE energy asset and the one or more controllers to allow the one or more controllers to receive the second data from the non-EVSE energy asset directly.
Clause 8: The method in accordance with clause 7, wherein to receive the second data from the non-EVSE energy asset directly comprises to receive the second data from the non-EVSE energy asset without requesting the second data from a separate controller.
Clause 9: The method in accordance with any one of clauses 1-8, further comprising: determining an amount of energy generation and an amount of energy utilization at a site comprising at least the EVSE and the non-EVSE energy asset; and controlling the non-EVSE energy asset based on the amount of energy generation and the amount of energy utilization.
Clause 10: The method in accordance with clause 9, wherein: the non-EVSE energy asset comprises at least one of a solar energy system, comprising one or more solar inverters, or an energy storage system; and controlling the non-EVSE energy asset comprises at least one of: controlling at least one of the one or more solar inverters; or controlling charging or discharging of the energy storage system.
Clause 11: The method in accordance with clause 10, further comprising determining a threshold amount of energy allowed for export to a utility grid connected to the site, wherein controlling the non-EVSE energy asset is further based on the threshold amount of energy allowed for export to the utility grid.
Clause 12: The method in accordance with any one of clauses 10-11, wherein controlling the non-EVSE energy asset comprises curtailing energy generation by the solar energy system.
Clause 13: The method in accordance with any one of clauses 10-12, further comprising determining a state of charge (SOC) of the energy storage system, wherein controlling the non-EVSE energy asset is further based on the SOC of the energy storage system.
Clause 14: A processing system, comprising: one or more memories comprising computer-executable instructions; and one or more processors configured to execute the computer-executable instructions and cause the processing system to perform a method in accordance with any one of clauses 1-13.
Clause 15: A processing system, comprising means for performing a method in accordance with any one of clauses 1-13.
Clause 16: A non-transitory computer-readable medium storing program code for causing a processing system to perform the steps of any one of clauses 1-13.
Clause 17: A computer program product embodied on a computer-readable storage medium comprising code for performing a method in accordance with any one of clauses 1-13.
Clause 18: A processing system, comprising: one or more memories; and one or more processors, coupled to the one or more memories, configured to cause the processing system to perform a method in accordance with any one of clauses 1-13.

### Additional Considerations

The preceding description is provided to enable any person skilled in the art to practice the various embodiments described herein. The examples discussed herein are not limiting of the scope, applicability, or embodiments set forth in the claims. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, the word "exemplary" means "serving as an example, instance, or illustration." Any aspect described herein as "exemplary" is not necessarily to be construed as preferred or advantageous over other aspects.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) (logic) and/or module(s), including, but not limited to a circuit, an application specific integrated circuit (ASIC), or processor. Generally, where there are operations illustrated in figures, those operations may have corresponding counterpart means-plus-function components with similar numbering.

The following claims are not intended to be limited to the embodiments shown herein, but are to be accorded the full scope consistent with the language of the claims. Reference to an element in the singular is not intended to mean only one unless specifically so stated, but rather "one or more." The subsequent use of a definite article (e.g., "the" or "said") with an element (e.g., "the processor") is not intended to invoke a singular meaning (e.g., "only one") on the element unless otherwise specifically stated. For example, reference to an element (e.g., "a processor," "a memory," "the processor," "the memory," etc.), unless otherwise specifically stated, should be understood to refer to one or more elements (e.g., "one or more processors," "one or more memories," etc.). The terms "set" and "group" are intended to include one or more elements, and may be used interchangeably with "one or more." Where reference is made to one or more elements performing functions (e.g., steps of a method), one element may perform all functions, or more than one element may collectively perform the functions. When more than one element collectively performs the functions, each function need not be performed by each of those elements (e.g., different functions may be performed by different elements) and/or each function need not be performed in whole by only one element (e.g., different elements may perform different sub-functions of a function). Similarly, where reference is made to one or more elements configured to cause another element (e.g., a system) to perform functions, one element may be configured to cause the other element to perform all functions, or more than one element may collectively be configured to cause the other element to perform the functions. Unless specifically stated otherwise, the term "some" refers to one or more. No claim element is to be construed under the provisions of 35 U.S.C. §1 12(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

While particular embodiments and aspects of the present disclosure have been illustrated and described herein, various other changes and modifications can be made without departing from the spirit and scope of the disclosure. Moreover, although various aspects have been described herein, such aspects need not be utilized in combination. Accordingly, it is therefore intended that the appended claims cover all such changes and modifications that are within the scope of the embodiments shown and described herein.

It should now be understood that embodiments disclosed herein include systems, methods, and non-transitory computer-readable mediums corresponding to controlling multiple DERs. It should also be understood that these embodiments are merely exemplary and are not intended to limit the scope of this disclosure.

## Claims

1. A method for operation of one or more controllers, comprising:
receiving, via a first device interface, first data from an electric vehicle supply equipment (EVSE);
receiving, via a second device interface, second data from a non-EVSE energy asset;
determining a charging rate for the EVSE based on the first data and the second data; and
controlling charging of the EVSE based on the charging rate.

2. The method of claim 1, wherein the first device interface comprises a first physical connector compatible with the EVSE and the second device interface comprises a second physical connector compatible with the non-EVSE energy asset, wherein the first physical connector is different than the second physical connector.

3. The method of claim 1 or 2, wherein the first device interface communicates with the EVSE using a first communication protocol and the second device interface communicates with the non-EVSE energy asset using a second communication protocol, wherein the first communication protocol is different than the second communication protocol.

4. The method of claim 3, wherein the first communication protocol comprises a packet based protocol, and wherein the second communication protocol comprises a serial protocol.

5. The method of any preceding claim, wherein the non-EVSE energy asset comprises at least one of: a solar energy system, a wind energy system, or an energy storage system.

6. The method of any preceding claim, wherein determining the charging rate is further based on at least one of: real-time weather data, historical weather data, weather forecast data, tariff data, historical asset energy interval data, forecasted asset energy interval data, real-time asset energy usage data, system constraint data, user preference data, or market-based strategy data.

7. The method of any preceding claim, wherein the second device interface is coupled between the non-EVSE energy asset and the one or more controllers to allow the one or more controllers to receive the second data from the non-EVSE energy asset directly.

8. The method of claim 7, wherein to receive the second data from the non-EVSE energy asset directly comprises to receive the second data from the non-EVSE energy asset without requesting the second data from a separate controller.

9. The method of any preceding claim, further comprising:
determining an amount of energy generation and an amount of energy utilization at a site comprising at least the EVSE and the non-EVSE energy asset; and
controlling the non-EVSE energy asset based on the amount of energy generation and the amount of energy utilization.

10. The method of claim 9, wherein:
the non-EVSE energy asset comprises at least one of a solar energy system, comprising one or more solar inverters, or an energy storage system; and
controlling the non-EVSE energy asset comprises at least one of:
controlling at least one of the one or more solar inverters; or
controlling charging or discharging of the energy storage system.

11. The method of claim 10, further comprising determining a threshold amount of energy allowed for export to a utility grid connected to the site,
wherein controlling the non-EVSE energy asset is further based on the threshold amount of energy allowed for export to the utility grid.

12. The method of claim 10 or 11, wherein controlling the non-EVSE energy asset comprises curtailing energy generation by the solar energy system.

13. The method of any of claims 10 to 12, further comprising determining a state of charge (SOC) of the energy storage system, wherein controlling the non-EVSE energy asset is further based on the SOC of the energy storage system.

14. A processing system for operation of one or more controllers, comprising: one or more memories comprising computer-executable instructions; and one or more processors, coupled to the one or more memories, configured to execute the computer-executable instructions and cause the processing system to:
receive, via a first device interface, first data from an electric vehicle supply equipment (EVSE);
receive, via a second device interface, second data from a non-EVSE energy asset;
determine a charging rate for the EVSE based on the first data and the second data; and
control charging of the EVSE based on the charging rate.

15. A computer-readable medium, comprising instructions that, when executed by one or more processors of a processing system, cause the processing system to:
receive, via a first device interface, first data from an electric vehicle supply equipment (EVSE);
receive, via a second device interface, second data from a non-EVSE energy asset;
determine a charging rate for the EVSE based on the first data and the second data; and
control charging of the EVSE based on the charging rate.
